(19) Europäisches Patentamt / European Patent Office / Office européen des brevets

(11) **EP 3 313 910 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(21) Anmeldenummer: **16731145.5**

(22) Anmeldetag: **22.06.2016**

(51) Int Cl.:
*C08G 18/76* (2006.01)    *C08G 18/32* (2006.01)
*C08G 18/48* (2006.01)    *C08G 18/66* (2006.01)
*C08J 5/04* (2006.01)    *B29C 70/48* (2006.01)
*B29K 75/00* (2006.01)

(86) Internationale Anmeldenummer:
**PCT/EP2016/064361**

(87) Internationale Veröffentlichungsnummer:
**WO 2016/207191 (29.12.2016 Gazette 2016/52)**

(54) **POLYURETHANSYSTEME FÜR SCHICHTAUFBAUTEN IN WINDKRAFTANLAGEN**

POLYURETHANE SYSTEMS FOR LAMINATED STRUCTURES IN WIND POWER PLANTS

SYSTÈMES DE POLYURÉTHANE POUR STRUCTURES EN COUCHES DANS DES INSTALLATIONS ÉOLIENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2015 EP 15173578**

(43) Veröffentlichungstag der Anmeldung:
**02.05.2018 Patentblatt 2018/18**

(73) Patentinhaber: **Covestro Deutschland AG**
**51373 Leverkusen (DE)**

(72) Erfinder:
• **SCHORNSTEIN, Marcel**
  **41462 Neuss (DE)**
• **HOFFMANN, Andreas**
  **50259 Pulheim (DE)**
• **WEGENER, Dirk**
  **40789 Monheim (DE)**
• **RASSELNBERG, Harald**
  **41541 Dormagen (DE)**
• **BOMHOLT, Niels**
  **5471 Søndersø (DK)**

(74) Vertreter: **Levpat**
**c/o Covestro AG**
**Gebäude 4825**
**51365 Leverkusen (DE)**

(56) Entgegenhaltungen:
WO-A1-2011/069975    WO-A1-2013/057070
US-A1- 2012 245 286

**Beschreibung**

Die Erfindung betrifft ein neues Polyurethansystem, welches sich vorteilhaft für die Herstellung großer Bauteile aus Faserverbundwerkstoffen einsetzen lässt, die Verwendung dieses Polyurethanystems für die Herstellung faserverstärkter Bauteile sowie die faserverstärkten Bauteile hergestellt mit dem neuen Polyurethansystem.

Große Bauteile aus Faserverbundwerkstoffen (faserverstärkte Bauteile) werden beispielsweise in der Windindustrie benötigt. Energie aus Windkraft gewinnt immer mehr an Bedeutung, so dass Windkraftanlagen, insbesondere die Rotorblätter und deren Herstellung intensiv untersucht und weiterentwickelt werden. Ein Hauptaugenmerk liegt dabei in der Qualität der hergestellten Rotorblätter und einer kostengünstigen Herstellung. Die bisher bekannten Rotorblätter für Windkraftanlagen bestehen aus faserverstärkten Kunststoffen auf der Basis von Harzen als Matrixmaterial, wie beispielsweise Polyesterharze (UP), Vinylesterharze (VE), Epoxidharze (EP). Die Herstellung der Blätter erfolgt hauptsächlich so, dass jeweils eine untere und eine obere Hälfte des Flügels in einem Stück hergestellt werden. Diese beiden Hälften werden anschließend aufeinander gelegt und verklebt. Zur Verstärkung werden Streben oder Gurte mit eingeklebt.

Bei der Herstellung der Flügelhälften werden zuerst Faserverbundwerkstoffe hergestellt, die aushärten müssen. Dieser Aushärteprozess ist sehr zeitaufwendig und nachteilig für eine schnelle Gesamtfertigung. Die Rotorblätter für Windkraftanlagen aus den vorgenannten Harzen werden üblicherweise durch Handlaminieren, Handlaminieren mit Unterstützung durch Prepregtechnologie, durch Wickelverfahren oder das vakuumunterstützte Infusionsverfahren hergestellt. Beim Handlaminieren wird zunächst eine Form präpariert, indem ein Trennmittel und gegebenenfalls ein Gelcoat auf die Formoberfläche aufgetragen werden. Anschließend werden nacheinander Glasgelege mit unidirektionaler oder biaxialer Orientierung in die Form gelegt. Danach wird das Harz auf das Gelege aufgetragen und manuell durch Rollen in das Gelege eingedrückt. Dieser Schritt kann entsprechend oft wiederholt werden. Zusätzlich können Gurte als Verstärkungsmaterial und sonstige Teile, wie z.B. Blitzschutzeinrichtungen eingearbeitet werden. Auf diese erste glasfaserverstärkte Schicht wird eine sogenannte Distanzschicht, in der Regel aus Balsaholz, Polyvinylchlorid (PVC)- oder Polyurethan (PUR)-Schaum, und eine zweite glasfaserverstärkte Schicht analog der ersten aufgetragen. Dieses Verfahren hat zwar den Vorteil, dass die Maschineninvestitionen gering und die Fehlererkennung und Korrekturmöglichkeit einfach sind, jedoch ist die Fertigung zu lohnintensiv, wodurch die Kosten des Verfahrens sehr hoch sind und die langen Fertigungszeiten zu mehr Fehlern und zu einem hohen Aufwand zur Qualitätssicherung führen.

Das Handlaminierverfahren mit Unterstützung durch Prepregtechnologie erfolgt ähnlich wie das einfache Handlaminierverfahren. Hierbei werden jedoch die sogenannten Prepregs (mit Harz getränkte vorgefertigte Glasmatten) außerhalb der Form hergestellt und dann in der Rotorblattform positioniert. Die gegenüber dem einfachen Handlaminieren durchgeführte Teilautomatisierung zur Fertigung der Prepregs führt zwar zu einer verbesserten Qualitätskonstanz bei der Rotorfertigung, jedoch erfordert der Schutz der Arbeiter vor den in den flüssigen Harzmischungen enthaltenen leichtflüchtigen Verbindungen einen nicht unerheblichen Aufwand.

Beim Harzinjektionsverfahren (auch als "Resin Transfer Molding" (RTM) oder "Vakuumunterstütztes Resin Transfer Molding" (VA RTM) oder "SCRIMP Process" (Seemann Composites Resin Infusion Molding Process) werden die Formen präpariert, indem ein Trennmittel und eventuell ein Gelcoat aufgetragen werden. Anschließend werden die trockenen Fasermatten nach einem genauen Fertigungsplan in die Form gelegt. Die erste eingelegte Schicht wird später die nach außen gelegene Schicht des Rotorblattes ergeben. Anschließend werden optional die Distanzmaterialien eingelegt, worauf wieder Fasermatten platziert werden, die dann die innere Schicht der fertigen Rotorhälfte/Rotorhalbschale bilden. Mit einer vakuumfesten Folie wird dann die gesamte Form hermetisch geschlossen. Aus der so präparierten Form wird die Luft aus Fasermatten und Distanzmaterialien gezogen, bevor an einer oder an verschiedenen Stelle(n) das Harz in die Form (Raum zwischen Folie und Form) injiziert wird. Dieses Verfahren hat - wie auch die beiden vorher genannten - den Nachteil, dass die notwendige Aushärtezeit bis zur Entformung des Bauteils mit herkömmlichen Materialien (UP-, VE- und EP-Harzen) bis zu 12 Stunden sehr lang ist und die Produktivität der Anlagen dadurch sehr stark eingeschränkt ist.

Für die Herstellung von großen Formteilen, wie sie für Rotorblätter eingesetzt werden, wird bevorzugt mit vakuumunterstützten Infusionsverfahren gearbeitet. Weiter müssen die zum Einsatz kommenden Harze eine lange offene Topfzeit sowie eine niedrige Viskosität besitzen und trotzdem an einem gewünschten Punkt schnell aushärten.

Neuere Entwicklungen zielen dabei bereits auf Polyurethansysteme, die dem industriellen Anwender schnellere Zykluszeiten durch schnelleres Aushärten sowie niedrigere Aushärtetemperaturen versprechen.

Im Sinne dieser Anmeldung wird der Begriff "Polyurethansystem" verwendet für ein Gemisch enthaltend reaktive Komponenten, welche unter Ausbildung von Urethangruppen polymerisieren können, bzw. auch für solche Gemische, in denen reaktive Komponenten und schon teilweise aufgebaute Polyurethane nebeneinander vorliegen (also das Polyurethanreaktionsgemisch).

Die Bezeichnung "Harz" oder "Polyurethanharz" wird in dieser Anmeldung für das ausreagierte Polyurethansystem verwendet.

WO 2011/069975 A2 beschreibt die Verwendung eines Schichtaufbaus bei der Herstellung von Rotorblättern für Windkraftanlagen, wobei der Schichtaufbau unter anderem eine mit Polyurethan versehene Faserschicht enthält. Es wird offenbart, dass in besonders bevorzugten Ausführungsformen zur Herstellung des Polyurethans Polyole mit einer OH-Zahl von 350 bis 500 mg KOH/g, Polyole mit 90% sekundären OH-Gruppen sowie Polyetherpolyole auf Basis Propylenoxid eingesetzt werden. Als Polyisocyanatmischung sollen insbesondere Gemische aus Diphenylmethandiisocyanaten und Polyphenylenpolymethylenpolyisocyanaten verwendet werden, wobei in genannten Ausführungsformen das eingesetzte MDI einen Gehalt an 2,2'-Diphenylmethandiisocyanat und an 2,4'- Diphenylmethandiisocyanat von zusammen mindestens 3 Gew.-%, bevorzugt mindestens 20 Gew.-%, besonders bevorzugt von mindestens 40 Gew.-% aufweisen soll. Der NCO-Gehalt des verwendeten Polyisocyanates sollte vorzugsweise über 25 Gew.-%, bevorzugt über 30 Gew.-%, besonders bevorzugt über 31,4 Gew.% liegen. Eine bevorzugte Funktionaliät der Polyole oder die Art der Startermoleküle für die Polyolherstellung (im nachfolgenden auch "Initiatoren" genannt) werden nicht beschrieben.

Die in den Beispielen der WO 2011/069975 A2 eingesetzten Polyole weisen eine nominale Funktionalität von 3,0 auf.

Der Ausdruck "nominale Funktionalität" wird in dieser Anmeldung verwendet, um die durchschnittliche Funktionalität (Anzahl von aktiven Wasserstoffatomen pro Molekül) eines Polyols bzw. einer Polyolmischung unter der Annahme anzugeben, dass diese identisch ist mit der durchschnittlichen Funktionalität (Anzahl von aktiven Wasserstoffatomen pro Molekül) des Initiators bzw. der Initiatoren, die bei ihrer Herstellung eingesetzt werden.

WO 2012/134878 A2 beschreibt ein Polyurethansystem zur Herstellung von verstärkten Verbundbauteilen. Das System soll eine Viskosität bei 25 ° C von weniger als 600 mPas für mindestens 30 Minuten, eine Gelzeit bei Umgebungstemperatur von mehr als 80 Minuten und einen Wassergehalt von weniger als 0,06%, bezogen auf das Gesamtsystem, aufweisen und wird verwendet, um Verbundwerkstoffe mit dem Vakuuminfusionsverfahren herzustellen.

Die in den Beispielen verwendeten Polyurethansysteme enthalten Polyolformulierungen mit einer nominalen Funktionalität f = 2,75 - 2,80 und enthalten einen Anteil der Summe von 2,2'-Diphenylmethandiisocyanat (2,2'-MDI) und 2,4'-Diphenylmethandiisocyanat (2,4'-MDI) in der Polyisocyanatmischung, der zwischen 1 und 19 Gew.-% liegt. Die Formulierungen sollen eine Anfangsviskosität von 250 mPa*s - 300 mPa*s (siehe WO 2012/134878 A2, Anspruch 3) aufweisen. Beispiel 2 weist eine Viskosität nach 40 Minuten von 360 mPa*s (s. WO 2012/134878 A2, Tabelle 3) auf. Die Formulierungen erfüllen somit nicht die Anforderungen, welche an ein solches System z.B. für die Herstellung von Rotorblättern und Strukturbauteilen von der Windenergie-Industrie gestellt werden. Die eingesetzten Fasergelege mit einem Flächengewicht von teilweise > 800 g/m$^2$ können mit der beschriebenen Lösung nur schlecht und sehr langsam via Vakuuminfusion infudiert werden. Da bereits nach 30 min eine Viskosität von 300 mPa*s vorliegt, ist die Verarbeitung bzw. Infusion des Harzes zu diesem Zeitpunkt kaum noch möglich, wodurch die Produktivität der Anlagen durch die hohen Füllzeiten sehr stark eingeschränkt ist. Insbesondere die Notwendigkeit des Einsatzes eines Fließadditives weist auf das Problem der schlechten Fließfähigkeit hin.

Die WO 2013/057070 A2 offenbart eine Polyisocyanurat aufweisende Faserschicht erhältlich aus einem System aus Polyisocyanat und Polyol mit einem Isocyanat-Index von 160-600 und Trimerisierungskatalysatoren. Außerdem wird die Verwendung der daraus hergestellten Faserverbundbauteile u.a. zur Herstellung von Rotorblättern von Windkraftanlagen beschrieben. Nachteil dieser Lösung ist, dass in dem Polyisocyanurat-Harz ein hoher Anteil an freiem Isocyanat ("Rest-NCO") verbleibt, welcher auch noch nach Aushärtung in Verbindung mit Luftfeuchte unkontrolliert unter $CO_2$-Bildung abreagieren und weitere unerwünschte Alterungsprozesse in Gang setzen kann.

Die EP 0 128 691 A2 offenbart die Herstellung eines spritzgegossenen Polyurethan-Elastomers aus Methylenbis(phenylisocyanaten) (MDI) enthaltend mehr als 10% des 2,4'-Isomers, einem aktive Wasserstoffe enthaltenden Polyether und einem Amin-terminierten Kettenverlängerungsmittel, wobei mehr als 50 % der aktiven Wasserstoffen des Polyethers aus primärem oder sekundären Amingruppen stammen. Die erforderliche lange Fließfähigkeit kann hiermit nicht erreicht werden.

Wie oben im Einzelnen erläutert, offenbart der Stand der Technik noch kein Polyurethansystem, welches sich ohne Einschränkungen zur Herstellung von großen faserverstärkten Bauteilen eignet. Die bisher bekannten Systeme weisen entweder nicht die geforderte Fließfähigkeit auf oder erfüllen nicht die an die Bauteile gestellten mechanischen Anforderungen.

Ausgehend von dem oben beschriebenen Stand der Technik ist es die Aufgabe, ein Polyurethansystem zur Herstellung von großen faserverstärkten Bauteilen, z.B. Rotorblättern bzw. Strukturbauteilen für die Windindustrie, zur Verfügung zu stellen, welches die vorgenannten Nachteile nicht aufweist und mit dem die großen faserverstärkten Bauteile kostengünstig in kürzerer Zeit und mit guten mechanischen Eigenschaften hergestellt werden können.

Diese Aufgabe konnte überraschend durch ein Polyurethansystem zur Herstellung eines Polyurethanharzes mit einer Dichte von > 1,050 g/cm$^3$ gelöst werden, welches erhältlich ist durch die Umsetzung von

a) einer Polyisocyanatmischung, bestehend aus einem oder mehreren Polyisocyanaten,

b) einer Polyolformulierung, bestehend aus mindestens einem Polyol,

c) 0 - 5 Gew.-%, bezogen auf das Gesamtgewicht des Polyurethansystems, einer Katalysatorkomponente,

d) 0 - 20 Gew.-%, bezogen auf das Gesamtgewicht des Polyurethansystems, wenigstens einer weiteren Verbindung mit mindestens einer gegenüber Isocyanaten reaktiven Gruppe,

e) 0 - 20 Gew.-%, bezogen auf das Gesamtgewicht des Polyurethansystems, Hilfs- und Zusatzmittel,

wobei

die Polyisocyanatmischung a) mindestens 25 Gew.-%, bezogen auf das Gesamtgewicht von a), 2,2'- Diphenylmethandiisocyanat (2,2'-MDI) und/oder 2,4'- Diphenylmethandiisocyanat (2,4'-MDI) enthält, und

der Anteil an endständigen primären OH-Funktionen in der Polyolformulierung b) höchstens 10 %, bevorzugt höchstens 5 %, besonders bevorzugt höchstens 1 %, bezogen auf die Gesamtzahl aller OH-Funktionen in der Polyolformulierung, beträgt, und

die durchschnittliche (Misch) - Hydroxylzahl der Polyolformulierung b) (im Folgenden auch vereinfacht "OH-Zahl" oder "Hydroxylzahl" genannt) mindestens 380 mg KOH/g beträgt, und die Polyolformulierung b) eine nominale Funktionalität von 2,05 - 2,7 aufweist,

und

das Polyurethansystem eine Isocyanat-Kennzahl von 90 - 120 aufweist.

Im Sinne dieser Anmeldung wird die Bezeichnung "Polyisocyanat" für eine organische Verbindung, die zwei oder mehrere Isocyanatgruppen (-N=C=O) enthält, verwendet.

Die Polyisocyanatkomponente enthält mindestens 25 Gew.-% an 2,2'- Diphenylmethandiisocyanat (2,2'-MDI) und / oder 2,4'- Diphenylmethandiisocyanat (2,4'-MDI), bevorzugt mindestens 30 Gew.-% und insbesondere bevorzugt mindestens 40 Gew.-%, bezogen auf das Gesamtgewicht der Polyisocyanatmischung.

Weiterhin können die üblichen aliphatischen, cycloaliphatischen, araliphatischen Di- und/oder Polyisocyanate und insbesondere aromatischen Isocyanate zum Einsatz kommen, welche aus der Polyurethanchemie bekannt sind. Beispiele solcher geeigneten Polyisocyanate sind Ethylendiisocyanat, 1,4-Butylendiisocyanat, 1,5-Pentandiisocyanat, 1,6-Hexamethylendiisocyanat (HDI), 1,12-Dodecandiisocyant, Cyclobutan-1,3-diisocyanat, Cyclohexan-1,3- und -1,4-diisocyanat und Mischungen dieser Isomere, Isophorondiisocyanat (IPDI), 2,4- und 2,6-Hexahydrotoluylendiisocyanat und Mischungen dieser Isomere, 2,2,4- und/oder 2,4,4-Trimethylhexamethylendiisocyanat, Bis(4,4', 2,4'-und 2,2'-isocyanatocyclohexyl)methan oder Mischungen dieser Isomere,

und aromatische Isocyanate der allgemeinen Formel $R(NCO)_z$, wobei R ein polyvalenter organischer Rest ist, der einen Aromaten aufweist, und z eine ganze Zahl von mindestens 2 ist. Beispiele hierfür sind 1,3-Diisocyanato-o-xylol, 1,3-Diisocyanato-p-xylol, 1,3-Diisocyanato-m-xylol, 2,4-Diisocyanato-1-chlorobenzol, 2,4-Diisocyanato-1-nitro-benzol, 2,5-Diisocyanato-1-nitrobenzol, m-Phenylendiisocyanat, p-Phenylendiisocyanat, 2,4-Toluylendiisocyanat, 2,6-Toluylendiisocyanat, Mischungen aus 2,4- and 2,6-Toluylendiisocyanat, 1,5-Naphthalindiisocyanat, 1-Methoxy-2,4-phenylendiisocyanat, 4,4'-Diphenylmethandiisocyanat, monomeres MDI und/oder höhere Homologe der monomeren MDI-Isomeren, 4,4'-Biphenylendiisocyanat, 3,3'-Dimethyl-4,4'-diphenylmethandiisocyanat, und 3,3'-Dimethyldiphenylmethan-4,4'-diisocyanat; Triisocyanate, wie 4,4',4''-Triphenylmethantriisocyanat und 2,4,6-Toluoltriisocyanat, und Tetraisocyanate, wie 4,4'-Dimethyl-2,2'-5,5'-diphenylmethantetraisocyanat sowie, 1,3- und/oder 1,4-Bis-(2-isocyanato-prop-2-yl)-benzol (TMXDI), 1,3-Bis-(isocyanatomethyl)benzol (XDI).

"Monomeres MDI" bedeutet im Sinne dieser Anmeldung ein(e) Polyisocyanatmischung bestehend aus einem oder mehreren Verbindungen ausgewählt aus 4,4'-Diphenylmethandiisocyanat, 2,4'-Diphenylmethandiisocyanat und 2,2'-Diphenylmethandiisocyanat.

"Oligomeres MDI" bedeutet im Sinne dieser Anmeldung ein(e) Polyisocyanatmischung bestehend aus höherkernigen Homologen des MDI, welche mindestens 3 aromatische Kerne und eine Funktionalität von mindestens 3 aufweisen.

"Polymeres MDI" wird in dieser Anmeldung verwendet, um eine Mischung bestehend aus oligomerem MDI und optional monomerem MDI zu bezeichnen.

Neben den vorstehend genannten Isocyanaten können auch modifizierte Isocyanate wie z.B. mit Alkoholen, insbesondere mit Polyetherolen oder Polyesterolen hergestellte Isocyanatprepolymere sowie z.B. solche mit Uretdion-, Isocyanurat-, Carbodiimid-, Uretonimin-, Allophanat- oder Biuretstruktur eingesetzt werden.

Neben den mindestens 25 Gew.-% 2,2'-MDI und/oder 2,4'-MDI enthält die Polyisocyanatkomponente bevorzugt 4,4'-MDI oder oligomeres MDI oder bevorzugt Mischungen aus mindestens einem Oligomer des MDI und mindestens einem der vorgenannten niedermolekularen MDI-Derivate 2,2'-MDI, 2,4'-MDI oder 4,4'-MDI mitverwendet.

Weiterhin bevorzugte Polyisocyanatmischungen a) haben einen Gehalt an monomerem MDI zwischen 50 und 100 Gew.-%, bevorzugt mehr als 60 Gew.-%, und besonders bevorzugt mehr als 75 Gew.-%. Der NCO-Gehalt des verwendeten Polyisocyanates sollte vorzugsweise über 25 Gew.-%, bevorzugt über 30 Gew.-%, besonders bevorzugt über 31,4 Gew.% liegen.

Besonders bevorzugt sind Polyisocyanatmischungen bestehend aus mindestens 95 Gew.-%, bevorzugt mindestens 99 Gew.-%, bezogen auf das Gesamtgewicht der Polyisocyanatmischung, monomerem MDI und optional oligomerem MDI. Wiederum bevorzugt ist es, dass diese Polyisocyanatmischung zu mindestens 75 Gew.-%, bezogen auf das Gesamtgewicht der Polyisocyanatmischung, aus Gemischen der Diphenylmethandiisocyanate besteht.

Die Viskosität des Isocyanates sollte vorzugsweise $\leq$ 250 mPas (bei 25°C), bevorzugt von $\leq$ 100 mPas (bei 25°C) und besonders bevorzugt von $\leq$ 50 mPas (bei 25°C) sein, gem. nach DIN 53019-1.

Die Polyolformulierung besteht aus mindestens einem Polyol und ist dadurch gekennzeichnet, dass der Anteil an endständigen primären OH-Funktionen in der Polyolformulierung höchstens 10 %, bevorzugt weniger als 5 % und besonders bevorzugt weniger als 1 %, bezogen auf die Gesamtzahl aller OH-Funktionen in der Polyolformulierung b), beträgt. Erfindungsgemäß können Polyetherpolyole, Polyesterpolyole, Polyetheresterpolyole oder Polycarbonatpolyole eingesetzt werden. Vorzugsweise werden in der Polyolformulierung Polyetherpolyole und/oder Polyesterpolyole, besonders bevorzugt Polyetherpolyole eingesetzt.

Die in der Polyolformulierung eingesetzten Polyole können neben der OH- Funktion auch weitere gegenüber Isocyanat reaktive Wasserstoffatome (= aktive Wasserstoffatome) enthalten, wie beispielsweise SH-Gruppen, NH-Gruppen, $NH_2$-Gruppen und CH-acide Gruppen. Auch wenn solche weiteren aktiven Wasserstoffatome vorhanden sind, stammen jedoch mehr als 90 %, insbesondere mehr als 95 %, besonders mehr als 99 % und ganz besonders bevorzugt 100 % aller gegenüber Isocyanat reaktiven Wasserstoffatome in der Polyolformulierung aus OH-Funktionen.

Solche Polyole sind beispielsweise von Ionescu in "Chemistry and Technology of Polyols for Polyurethanes", Rapra Technology Limited, Shawbury 2005, S.31 ff. (Kap. 3: The General Characteristics of Oligo-Polyols, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden.

Die Polyolformulierung weist eine Hydroxylzahl von > 380 mg KOH/g, bevorzugt von 440 bis 580 mg KOH/g und besonders bevorzugt von 470 bis 520 mg KOH/g auf.

Die Polyolformulierung weist eine nominale Funktionalität von 2,05 - 2,70, bevorzugt von 2,10 bis 2,65 auf.

Erfindungsgemäß kommen insbesondere Verbindungen mit 1,8 bis 8, insbesondere 2 - 8 OH-Gruppen zum Einsatz.

Bevorzugt werden als Polyolkomponente b) ein oder mehrere Polyhydroxypolyether eingesetzt, welche auf an sich bekannte Weise durch Polyaddition von Alkylenoxiden wie Propylenoxid und/oder Ethylenoxid an polyfunktionelle Starterverbindungen in Gegenwart von Katalysatoren hergestellt werden können. Bevorzugt werden die Polyhydroxypolyether aus einer Starterverbindung mit durchschnittlich 2 bis 8 aktiven Wasserstoffatomen und einem oder mehreren Alkylenoxiden, z.B. Ethylenoxid, Butylenoxid und/oder Propylenoxid, hergestellt. Bevorzugte Starterverbindungen sind Moleküle mit zwei bis acht Hydroxylgruppen pro Molekül wie Wasser, Ethylenglykol, Propylenglykol, Diethylenglykol, Dipropylenglykol, Triethylenglykol, Tripropylenglykol, 1,4-Butandiol, 1,6-Hexandiol, Bisphenol A, Glycerin, Trimethylolpropan, Pentaerythrit, Sorbit und Saccharose und aminische Starterverbindungen wie z.B. Ethylendiamin und Triethanolamin. Die Starterverbindungen können allein oder im Gemisch verwendet werden. Besonders bevorzugt sind 1,2- und 1,3- Propylenglykol, Diethylenglykol, Sorbit, Glycerin, Trimethylolpropan, Saccharose und Gemische aus den genannten Produkten. Polyetherpolyole auf Basis Propylenoxid sind besonders bevorzugt. Vertreter der genannten Komponente b) sind z.B. im Kunststoff-Handbuch, Band VII "Polyurethane", 3. Auflage, Carl Hanser Verlag, München / Wien, 1993, Seiten 57 - 67 bzw. Seiten 88 - 90 beschrieben.

Bei den Polyesterpolyolen handelt es sich um Estergruppen aufweisende Polyhydroxylverbindungen wie z.B. Ricinusöl oder Polyhydroxypolyester, wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind.

Als Katalysatoren c) können beispielsweise die bekannten Polyurethankatalysatoren eingesetzt werden, wie z.B. organische Metallverbindungen, wie Kalium- oder Natriumsalze organischer Carbonsäuren wie z.B. Kaliumacetat; ebenso Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutylzinndiacetat, Dibutylzinndilaurat, Dimethylzinndilaurat, Dibutylzinnmaleat und Dioctylzinndiacetat, weiterhin beispielsweise Diisooctyl-2,2'-[(dioctyltannylen)bis(thio)]diacetat und Di-n-butyl-bis(dodecylthio)-Zinn und/oder stark basische Amine wie 2,2,2-Diazabicyclooctan, N,N-Dimethylaminopropylamin, N,N-bis(3-dimethylaminopropyl)-N-isopropanolamin, Triethylamin, Triethylendiamin, Tetramethylhexamethylendiamin, Pentamethyldiethylentriamin, N,N-Dimethylcyclohexylamin oder Bis(N,N-Dimethylaminoethyl)ether, N,N-Dimethylbenzylamin, N,N-Methyldibenzylamin und N-Methylimidazol, und latente Katalysatoren. Latente Katalysatoren und ihr Wirkmechanismus werden beispielsweise in EP 2531538 A1, Seiten 1 - 4 sowie Seite 9, Zeilen 26 - Seite 10, Zeile 2 beschrieben. Typische latente Katalysatoren sind blockierte Amin- und Amidin-Katalysatoren, z.B. Katalysatoren der Hersteller Air Products (wie z.B. Polycat® SA-1/10, Dabco KTM 60) und Tosoh Corporation (wie etwa Toyocat® DB 2, DB 30, DB 31, DB 40, DB 41, DB 42, DB 60, DB 70). Weitere Vertreter von Katalysatoren sowie Einzelheiten über die Wirkungsweise der Katalysatoren sind im Kunststoff-Handbuch, Band VII "Polyurethane", 3. Auflage, Carl Hanser Verlag, München / Wien, 1993 auf den Seiten 104 - 110 beschrieben.

Die aktive Katalysatorkomponente (exklusive Lösungsmittel) wird in einer Menge von 0 - 5 Gew.-%, bevorzugt von 0,005 - 4 Gew.-%, insbesondere bevorzugt von 0,008 - 3 Gew.-% und ganz besonders bevorzugt von 0,010 - 1 Gew.-%, bezogen auf das Gesamtgewicht des Polyurethansystems, eingesetzt.

In einer bevorzugten Ausführungsform werden thermolatente Katalysatoren in einer Menge (bezogen auf die aktive Komponente exklusive Lösungsmittel) von 0,001 - 5 Gew.-%, bevorzugt von 0,005 - 1 Gew.-%, bezogen auf das Gesamtgewicht des Polyurethansystems, eingesetzt.

Das Polyurethansystem kann 0 - 20 Gew.-%, bevorzugt 5 - 15 Gew.-% und in anderen Ausführungsformen 0 - 5 Gew.-% bzw. 0,5 - 5 Gew.-%, bezogen auf das Gesamtgewicht des Polyurethansystems, an weiteren Isocyanat-reaktiven Komponenten d) enthalten, welche von der Komponente b) verschieden sind und wie sie als Komponenten für Polyurethan an sich bekannt sind. Beispiele sind ein- und mehrwertige Alkohole bzw. Polyethermonoole und/oder (Oxy)alkylendiole, z.B. Ethylenglykol und seine Oligomeren, Hexandiol-1,6, Glycerin oder Trimethylolpropan, Dimethylsiloxan-Einheiten aufweisende Polyole, z.B. Bis-(dimethylhydroxymethyl-silyl)ether und Dianhydrohexitole; Verträglichkeitsvermittler wie Methacrylsäure, β-Hydroxypropylester, Maleinsäure- und Fumarsäureester; Amine, Polyamine und Epoxide.

Das Polyurethansystem kann bevorzugt neben den bekannten reaktiven Komponenten weitere Hilfs- und Zusatzmittel e) enthalten, wie beispielsweise Metallkomplexbildner, Entschäumer, Emulgatoren, Wasserbinder und Haftvermittler sowie Füllstoffe, wie Bariumsulfat, Titandioxid, Kurzfasern, beispielsweise aus Glas oder Carbon, oder natürliche faser- oder plättchenförmige Minerale, wie z.B. Wollastonite oder Muskowite. Weitere bekannte Additive, beispielsweise interne Trennmittel, wie z.B. fettsäurebasierte Systeme, und Zusatzmittel können bei Bedarf verwendet werden.

In einer bevorzugten Ausführungsform enthält das Polyurethansystem ein internes Trennmittel basierend auf Fettsäureester ausgewählt aus der Gruppe bestehend aus Estergruppen aufweisenden Kondensationsprodukten mit jeweils einem zahlenmittleren Molekulargewicht von 650 bis 3000 g/mol, einer Säurezahl von unter 5 und einer Hydroxylzahl von 28 bis 112 und jeweils einer zahlenmittleren Funktionalität von 1,0 bis 3,0 aus einer oder mehreren Fettsäuren mit 10 bis 30 Kohlenstoffatomen, einer oder mehreren niedermolekularen aliphatischen und/oder aromatischen Di- und/oder Tricarbonsäuren mit jeweils einem zahlenmittleren Molekulargewicht von 50 bis 500 g/mol und/oder deren Derivaten und einem oder mehreren ein- oder mehrwertigen Alkoholen mit jeweils einem zahlenmittleren Molekulargewicht bis zu 500 g/mol und jeweils einer zahlenmittleren Funktionalität von 1,5 bis 6.

In einer bevorzugten Ausführungsform wird der Wassergehalt der Komponenten b) und gegebenenfalls c) - e) z.B. mittels Vakuumverfahren oder durch Zusatz von wasserbindenden Substanzen reduziert bzw. entfernt. Dies hat beispielsweise einen Einfluss auf die Dichte des Harzes (Unterdrückung von unerwünschter $CO_2$-Bildung).

Zur Herstellung der Polyurethanharze werden die Polyisocyanate (a) und die Isocyanat-reaktiven Komponenten in solchen Mengen zur Umsetzung gebracht, dass die Isocyanat-Kennzahl der Rezeptur 90 - 120, in der Regel 95 - 115, bevorzugt 100 bis 110, besonders bevorzugt 102 bis 108 beträgt.

Unter der Isocyanat-Kennzahl (auch Kennzahl, NCO/OH-Index oder Isocyanat-Index genannt) wird dabei der Quotient aus der tatsächlich eingesetzten Stoffmenge [mol] an Isocyanat-Gruppen und der tatsächlich eingesetzten Stoffmenge [mol] an Isocyanat-reaktiven Gruppen, multipliziert mit 100, verstanden:

$$\text{Kennzahl} = (\text{mol Isocyanat-Gruppen} / \text{mol Isocyanat-reaktive Gruppen}) * 100$$

Eine äquivalente Menge an NCO-Gruppen und NCO-reaktiven H-Atomen entspricht dabei einem NCO/OH-Index von 100.

Die erfindungsgemäßen Polyurethansysteme weisen die folgenden Eigenschaften auf:

1. eine Anfangsviskosität (gem. nach DIN 53019-1 bei 23°C) zu einem Zeitpunkt $t_0=0$ min nach Mischung der Komponenten a) - e) < 180 mPa*s,

2. eine Viskosität (gem. nach DIN 53019-1 bei 23 °C) zu einem Zeitpunkt $t_1=40$ min nach Mischung der Komponenten a) -e) < 360 mPa*s

3. eine Gelzeit tg ≥ 90 min, bevorzugt ≥ 100 min, besonders bevorzugt ≥ 110 min.

Das Polyurethansystem reagiert zu einem Polyurethanharz mit einer Dichte von > 1,050 g/cm$^3$.

Mit dem erfindungsgemäßen Polyurethansystem gelingt es gleichzeitig, die für bestimmte Bauteile und Anwendungen, z.B. in der Windindustrie, geltenden Anforderungen an mechanische Kennwerte zu erfüllen.

Beispielsweise beträgt die HDT (Wärmeformbeständigkeit) nach DIN EN 75-1 mindestens 65°C, bevorzugt mindestens 70 °C.

Beispielsweise beträgt die Zugfestigkeit mindestens 65 MPa (nach DIN EN ISO 527).

Beispielsweise beträgt die Biegefestigkeit mindestens 95 MPa (nach DIN EN ISO 178).

Die Details der für die Bestimmung der für die Messung der in dieser Anmeldung aufgeführten Kennwerte zu verwendenden Normen und Messgeräte sind weiter unten im Beispielteil aufgeführt ("Verwendete Normen bzw. Messgeräte").

Die erfindungsgemäßen Polyurethansysteme weisen bevorzugt zu einem Zeitpunkt $t_e \leq (t_g + 4h)$ einen Umsatz $C_e$, bezogen auf die NCO-Gruppen im Polyisocyanat von mindestens 95 % auf.

Ein weiterer Gegenstand der Erfindung ist ein Verfahren zur Herstellung eines faserverstärkten Bauteils aus einem Polyurethanharz mit einer Dichte von > 1,050 g/cm$^3$ mittels Vakuuminfusionverfahren, umfassend die Schritte

i. Entgasen der Komponenten a) und b) und gegebenenfalls c) - e)

ii. Vermischen der Komponenten a) - e) unter Erhalt eines Polyurethansystems,

iii. Vakuum-unterstütze Infusion des Polyurethansystems in eine Faserschicht

iv. Aushärten und Entformen des Bauteils.

Als Faserschicht können vorzugsweise Glasfaserwirrlagen, Glasfasergewebe und -gelege, geschnittene oder gemahlene Glas- oder Mineral-Fasern sowie Fasermatten, -vliese und -gewirke auf der Basis von Polymer-, Mineral-, Kohlenstoff-, Glas-, Carbon- bzw. Aramidfasern und Naturfasern wie z.B. Flachs, Sisal und Jute sowie deren Mischungen, besonders bevorzugt Glasfasermatten oder Glasfaservliese eingesetzt werden.

In einer bevorzugten Ausführungsform wird die Reaktionsmischung aus Isocyanatkomponente und Verbindungen mit mindestens zwei gegenüber Isocyanaten reaktiven Wasserstoffatomen bei einer Temperatur unter 80 °C, bevorzugt zwischen 10 °C und 50 °C, besonders bevorzugt zwischen 20 °C und 40 °C, infudiert.

Nach dem Einfüllen der Reaktionsmischung kann das Aushärten des Polyurethans durch Heizen der Form beschleunigt werden. In einer bevorzugten Ausführungsform wird das injizierte Polyurethansystem bei einer Temperatur zwischen 40 und 160 °C, bevorzugt zwischen 60 und 120 °C, besonders bevorzugt zwischen 70 und 90 °C, ausgehärtet.

In einer besonders bevorzugten Ausführungsform handelt es sich bei dem erfindungsgemäßen Polyurethansystem zur Herstellung eines Polyurethanharzes mit einer Dichte von > 1,050 g/cm3, bestehend aus

a) eine Polyisocyanatmischung bestehend aus mindestens 95 Gew.-%, bezogen auf das Gesamtgewicht der Polyisocyanatmischung, aus monomerem und optional oligomerem MDI,

b) eine Polyolformulierung, bestehend aus mindestens einem Polyol auf Polypropylenoxidbasis,

c) einer Katalysatorkomponente mindestens enthaltend einen thermolatenten Katalysator in einer Menge (bezogen auf die aktive Komponente exklusive Lösungsmittel) von 0,001 - 5 Gew.-%, bevorzugt von 0,005 - 1 Gew.-%, bezogen auf das Gesamtgewicht des Polyurethansystems,

d) 0 - 20 Gew.-%, bezogen auf das Gesamtgewicht des Polyurethansystems, wenigstens einer weiteren Verbindung mit mindestens einer gegenüber Isocyanaten reaktiven Gruppe,

e) > 0 bis < 20 Gew.-%, bezogen auf das Gesamtgewicht des Polyurethansystems, Hilfs- und Zusatzmittel, mindestens enthaltend einen Metallkomplexbildner,

dadurch gekennzeichnet, dass
die Polyisocyanatmischung a) mindestens 25 Gew.-%, bezogen auf das Gesamtgewicht von a), 2,2'-Diphenylmethandiisocyanat (2,2'-MDI) und/oder 2,4'- Diphenylmethandiisocyanat (2,4'-MDI) enthält, und
der Anteil an endständigen primären OH-Funktionen in der Polyolformulierung b) höchstens 10 %, bezogen auf die Gesamtzahl aller OH-Funktionen in b), beträgt, und
die Hydroxylzahl der Polyolformulierung b) von 470 bis 520 mg KOH/g beträgt, und
die Polyolformulierung b) eine nominale Funktionalität von 2,10 bis 2,65 aufweist,
und
das Polyurethansystem eine Isocyanat-Kennzahl von 102 - 108 aufweist.

Die Erfindung soll anhand der nachfolgenden Beispiele noch näher erläutert werden.

## Beispiele

Um die Polyurethanharzeigenschaften zu bestimmen, wurden Formkörper (Platten) aus erfindungsgemäßen Polyurethansystemen hergestellt und mit nicht-erfindungsgemäßen Systemen verglichen.

Die Polyolmischung sowie die Isocyanatmischung wurden jeweils bei einem Druck von 1 mbar und 25 °C für 2 Stunden entgast. Im Anschluss wurden zur Herstellung des Reaktionsgemisches beide Komponenten im Vakuum mittels Blattrührer intensiv vermischt und weitere 10 min bei 1 mbar entgast. Danach erfolgte die Überführung des Reaktionsgemisches in eine Plattenform mit den Abmessungen 300 mm x 200 mm x 4 mm und einer Formtemperatur von 40 °C. Die Formtemperatur wurde innerhalb von 30 min. auf 80 °C erhöht und dann für 3,5 h konstant gehalten. Die fertige Platte wurde nach dem Abkühlen der Form auf Raumtemperatur entformt.

Aus den Platten wurden Probenkörper für einen Zugversuch nach DIN EN ISO 527, Biegeversuch nach DIN EN ISO 178, Wärmeformbeständigkeit nach ISO 75 - 1/75 2004 (Verfahren A - hochkant) hergestellt und der Modul, die Festigkeit, die Dehnung und die HDT jeweils nach diesen Normen bestimmt.

Zusätzlich wurden die Eigenschaften des Harzes bis zur Aushärtung durch die Gelzeit sowie den Viskositätsverlauf bei 23 °C bestimmt. Hierzu wurde das homogenisierte Reaktionsgemisch aus der Polyolmischung und der Isocyanatmischung am Geltimer (75g) bzw. am Rheometer vermessen.

**Verwendete Normen bzw. Messgeräte:**

Zugversuch nach DIN EN ISO 527: Kunststoffe - Bestimmung der Zugeigenschaften - Teil 1: Allgemeine Grundsätze (ISO 527-1:2012); Deutsche Fassung EN ISO 527-1:2012

Biegeversuch nach DIN EN ISO 178: Kunststoffe - Bestimmung der Biegeeigenschaften (ISO 178:2010 + Amd.1:2013); Deutsche Fassung EN ISO 178:2010 + A1:2013

HDT nach ISO 75 - 1/75 2004 Verfahren A (hochkant)

Dichte nach DIN EN ISO 1183-1 - Verfahren A: Kunststoffe -Verfahren zur Bestimmung der Dichte von nicht verschäumten Kunststoffen Teil 1: Eintauchverfahren, Verfahren mit Flüssigkeitspyknometer und Titrationsverfahren (ISO 1183-1:2004); Deutsche Fassung EN ISO 1183-1:2004

Rheometer: MCR 501 der Fa. Anton Paar

Viskosität gemäß Norm DIN 53019-1:2008-09 (H << R), (d/dt = 100 1/s): d/dt = Scherrate, Platte - Platte Messsystem PP 25, Messung in Rotation:
Geltimer: Gardco von Fa. Paul N. Gardner, Model GT-SHP-220; Ermittlung der Gelzeit: Mittels dieses Gerätes wird die Gelzeit des Harzes ermittelt. Das Gerät besteht aus einem Rührer, der in die Reaktionsmischung eintaucht und durch einen elektrischen Motor angetrieben wird. Sobald das für dieses Gerät spezifische maximale Drehmoment (das Harz liegt nun hochviskos bzw. fest vor) erreicht wird, stoppt der Motor, und die Gelzeit kann am Gerät abgelesen werden.

Bestimmung der Hydroxylzahl gemäß DIN EN ISO 53240,-Teil 2: Verfahren mit Katalysator, Version November 2007

## Beispiel 1: Herstellung der Polyurethanplatten

40 g eines Polyetherpolyols mit einer OH-Zahl von 400 mg KOH/g und einer nominalen Funktionalität von 3 (Viskosität bei 25 °C: 370 mPa*s; Glycerin als Starter; Propylenoxidbasis, Handelsname Arcol® Polyol 1030 - Produkt der Firma Bayer MaterialScience AG), 160 g eines Polyetherpolyols mit einer OH-Zahl von 515 mg KOH/g und einer nominalen Funktionalität von 2 (Viskosität bei 25 °C: 55 mPa*s; 1,2-Propylenglycol als Starter; Propylenoxidbasis, Handelsname L 800 - Produkt der Firma Bayer MaterialScience AG) und 0,20 g Toyocat DB40 (thermolatenter Katalysator / blockiertes Amin der Firma TOSOH Corporation) wurden vermischt und für 2 Stunden bei einem Druck von 1 mbar entgast. Zeitgleich wurden 234,6 g einer Isocyanatmischung MDI 1 (NCO - Gehalt 32,9 Gew.%; hergestellt aus MDI 1806; monomeres MDI der Firma Bayer MaterialScience AG und MDI 44 V 20L; polymeres MDI der Firma Bayer MaterialScience AG mit einem 2,2'- MDI - Gehalt von 0,6 Gew.%, 2,4'-MDI-Gehalt von 42,6 Gew.%) und 0,06 g Acetylaceton ebenfalls für 2 Stunden bei einem Druck von 1 mbar entgast, im Anschluss zur Polyolformulierung zugegeben und weitere 10 min. bei 1 mbar weiter entgast.

Das so hergestellte Reaktionsgemisch wurde danach in eine Plattenform mit den Abmessungen 300 mm x 200 mm x 4 mm und einer Formtemperatur von 40 °C überführt. Die Formtemperatur wurde innerhalb von 30 min auf 80 °C erhöht, für 3,5 h konstant gehalten und die fertige Platte nach dem Abkühlen der Form auf Raumtemperatur entformt. Die mechanischen Daten der Platte sind in Tabelle 1 aufgeführt. Um die Gelzeit des Harzes (Reaktionsgemisches) sowie den Viskositätsverlauf bei 23 °C zu bestimmen, wurden die Polyolformulierung sowie die Isocyanatabmischung ohne vorheriges Entgasen im oben genannten Verhältnis eingewogen und via Holzlatte im Pappbecher für 10 Sekunden vermischt, so dass ein homogenes Reaktionsgemisch vorlag. Das Gemisch wurde in den Geltimer bzw. das Rheometer überführt.

**Beispiel 2: Herstellung der Polyurethanplatten**

57,3 g eines Polyetherpolyols mit einer OH-Zahl von 430 mg KOH/g und einer nominalen Funktionalität von 4,6 (Viskosität bei 25 °C: 4900 mPa*s; Glycerin (30%) / Sorbitol (70%) als Starter; Propylenoxidbasis, Handelsname Desmophen® S 440 - Produkt der Firma Bayer MaterialScience AG), 160 g eines Polyetherpolyols mit einer OH-Zahl von 515 mg KOH/g und einer nominalen Funktionalität von 2 (Viskosität bei 25 °C: 55 mPa*s; 1,2-Propylenglycol als Starter; Propylenoxidbasis, Handelsname Polyether L 800 Produkt der Firma Bayer MaterialScience AG) und 0,20 g Toyocat DB40 (thermolatenter Katalysator / blockiertes Amin der Firma TOSOH Corporation) wurden vermischt und für 2 Stunden bei einem Druck von 1 mbar entgast. Zeitgleich wurden 255,1 g einer Isocyanatmischung MDI 1 (NCO - Gehalt 32,9 Gew.%; hergestellt aus MDI 1806; monomeres MDI der Firma Bayer MaterialScience AG und MDI 44 V 20L; polymeres MDI der Firma Bayer MaterialScience AG mit einem 2,2'-MDI - Gehalt von 0,6 Gew.%, 2,4'-MDI-Gehalt von 42,6 Gew.%) und 0,06 g Acetylaceton ebenfalls für 2 Stunden bei einem Druck von 1 mbar entgast, im Anschluss zur Polyolformulierung zugegeben und weitere 10 min. bei 1 mbar weiter entgast. Das so hergestellte Reaktionsgemisch wurde danach in eine Plattenform mit den Abmessungen 300 mm x 200 mm x 4 mm und einer Formtemperatur von 40 °C überführt. Die Formtemperatur wurde innerhalb von 30 min. auf 80 °C erhöht, für 3,5 h konstant gehalten und die fertige Platte nach dem Abkühlen der Form auf Raumtemperatur entformt. Die mechanischen Daten der Platte sind in Tabelle 1 aufgeführt. Um die Gelzeit sowie den Viskositätsverlauf bei 23 °C des Harzes (Reaktionsgemisches) zu bestimmen, wurden die Polyolformulierung sowie die Isocyanatabmischung ohne vorheriges Entgasen im oben genannten Verhältnis eingewogen und via Holzlatte im Pappbecher für 10 Sekunden vermischt, sodass ein homogenes Reaktionsgemisch vorlag. Das Gemisch wurde in den Geltimer bzw. das Rheometer überführt.

**Vergleichsbeispiel 3: Herstellung der Polyurethanplatten**

180 g eines Polyetherpolyols mit einer OH-Zahl von 380 mg KOH/g und einer nominalen Funktionalität von 3 (Viskosität bei 25 °C: 600 mPa*s; Trimethylolpropan als Starter; Propylenoxidbasis, Handelsname Desmophen® 550 U - Produkt der Firma Bayer MaterialScience AG), 20 g eines Polyetherpolyols mit einer OH-Zahl von 550 mg KOH/g und einer nominalen Funktionalität von 3 (Viskosität bei 25 °C: 1800 mPa*s; Trimethylolpropan als Starter; Propylenoxidbasis, Handelsname DE 4011T - Produkt der Firma Bayer MaterialScience AG) wurden vermischt und für 2 Stunden bei einem Druck von 1 mbar entgast. Zeitgleich wurden 188,5 g einer Isocyanatmischung MDI 2 (NCO-Gehalt 32,6 Gew.-%; hergestellt aus Desmodur® 60 RE 11 (polymeres MDI der Firma Bayer MaterialScience AG) mit einem 2,4 MDI-Gehalt von 23 Gew.%; 2,2'- MDI-Gehalt von 3,0 Gew.%; einem 2-Kern MDI-Gehalt von 85 Gew.%) und 0,4 g Stabilisator MC (50 %ige Lösung von Phthaloylchlorid in MDI 1806) ebenfalls für 2 Stunden bei einem Druck von 1 mbar entgast, im Anschluss zur Polyolformulierung zugegeben und weitere 10 min bei 1 mbar weiter entgast. Das so hergestellte Reaktionsgemisch wurde danach in eine Plattenform mit den Abmessungen 300 mm x 200 mm x 4 mm und einer Formtemperatur von 40 °C überführt. Die Formtemperatur wurde innerhalb von 30 min. auf 80 °C erhöht, für 3,5 h konstant gehalten und die fertige Platte nach dem Abkühlen der Form auf Raumtemperatur entformt. Die mechanischen Daten der Platte sind in Tabelle 1 aufgeführt. Um die Gelzeit sowie den Viskositätsverlauf bei 23 °C des Harzes (Reaktionsgemisches) zu bestimmen, wurden die Polyolformulierung sowie die Isocyanatabmischung ohne vorheriges Entgasen im oben genannten Verhältnis eingewogen und via Holzlatte im Pappbecher für 10 Sekunden vermischt, so dass ein homogenes Reaktionsgemisch vorlag. Das Gemisch wurde in den Geltimer bzw. das Rheometer überführt.

**Vergleichsbeispiel 4: Herstellung der Polyurethanplatten**

200 g eines Polyetherpolyols mit einer OH-Zahl von 515 mg KOH/g und einer nominalen Funktionalität von 2 (Viskosität bei 25 °C: 55 mPa*s; 1,2-Propylenglycol als Starter; Propylenoxidbasis, Handelsname Polyether L 800 - Produkt der Firma Bayer MaterialScience AG) wurden für 2 Stunden bei einem Druck von 1 mbar entgast. Zeitgleich wurden 244,4 g einer Isocyanatmischung MDI 3 (NCO-Gehalt 32,6 Gew.-%; hergestellt aus Desmodur 60 RE 11 (polymeres MDI der Firma Bayer MaterialScience AG) mit einem 2,4'-MDI-Gehalt von 23 Gew.%; 2,2'- MDI-Gehalt von 3,0 Gew.%; einem 2-Kern MDI-Gehalt von 85 Gew.%) und 0,06 g Acetylaceton ebenfalls für 2 Stunden bei einem Druck von 1 mbar entgast, im Anschluss zur Polyolformulierung zugegeben und weitere 10 min. bei 1 mbar weiter entgast. Das so hergestellte Reaktionsgemisch wurde danach in eine Plattenform mit den Abmessungen 300 mm x 200 mm x 4 mm und einer Formtemperatur von 40 °C überführt. Die Formtemperatur wurde innerhalb von 30 min. auf 80 °C erhöht, für 3,5 h konstant gehalten und die fertige Platte nach dem Abkühlen der Form auf Raumtemperatur entformt. Die mechanischen Daten der Platte sind in Tabelle 1 aufgeführt. Um die Gelzeit sowie den Viskositätsverlauf bei 23 °C des Harzes (Reaktionsgemisches) zu bestimmen, wurden die Polyolformulierung sowie die Isocyanatabmischung ohne vorheriges Entgasen im oben genannten Verhältnis eingewogen und via Holzlatte im Pappbecher für 10 Sekunden vermischt, so dass ein homogenes Reaktionsgemisch vorlag. Das Gemisch wurde in den Geltimer bzw. das Rheometer überführt.

**Vergleichsbeispiel 5: Herstellung der Polyurethanplatten**

40 g eines Polyetherpolyols mit einer OH-Zahl von 565 mg KOH/g und einer nominalen Funktionalität von 3 (Viskosität bei 20 °C: 1010 mPa*s; Glycerin als Starter; Propylenoxidbasis, , Handelsname Desmophen® 30 SC 01 - Produkt der Firma Bayer MaterialScience AG), 160 g eines Polyetherpolyols mit einer OH-Zahl von 260 mg KOH/g und einer nominalen Funktionalität von 2 (Viskosität bei 25 °C: 70 mPa*s; 1,2 Propandiol als Starter; Propylenoxidbasis,, Handelsname Arcol® Polyol 1004 - Produkt der Firma Bayer MaterialScience AG) wurden vermischt und für 2 Stunden bei einem Druck von 1 mbar entgast. Zeitgleich wurden 154,4 g einer Isocyanatmischung MDI 3 (NCO-Gehalt 32,6 Gew.-%; hergestellt aus Desmodur® 60 RE 11 (polymeres MDI der Firma Bayer MaterialScience AG) mit einem 2,4'-MDI-Gehalt von 23 Gew.%; 2,2'-MDI-Gehalt von 3,0 Gew.%; einem 2-Kern MDI-Gehalt von 85 Gew.%) und 0,06 g Acetylaceton ebenfalls für 2 Stunden bei einem Druck von 1 mbar entgast und im Anschluss zur Polyolformulierung zugegeben und weitere 10 min bei 1 mbar weiter entgast. Das so hergestellte Reaktionsgemisch wurde danach in eine Plattenform mit den Abmessungen 300 mm x 200 mm x 4 mm und einer Formtemperatur von 40 °C überführt. Die Formtemperatur wurde innerhalb von 30 min auf 80 °C erhöht, für 3,5h konstant gehalten und die fertige Platte nach dem Abkühlen der Form auf Raumtemperatur entformt. Die mechanischen Daten der Platte sind in Tabelle 1 aufgeführt. Um die Gelzeit sowie den Viskositätsverlauf bei 23 °C des Harzes (Reaktionsgemisches) zu bestimmen, wurden die Polyolformulierung sowie die Isocyanatabmischung ohne vorheriges Entgasen im oben genannten Verhältnis eingewogen und via Holzlatte im Pappbecher für 10 Sekunden vermischt, so dass ein homogenes Reaktionsgemisch vorlag. Das Gemisch wurde in den Geltimer bzw. das Rheometer überführt.

**Vergleichsbeispiel 6: Herstellung der Polyurethanplatten**

20 g eines Polyetherpolyols mit einer OH-Zahl von 565 mg KOH/g und einer nominalen Funktionalität von 3 (Viskosität bei 20 °C: 1010 mPa*s; Glycerin als Starter; Propylenoxidbasis, Handelsname Desmophen® 30 SC 01 Produkt der Firma Bayer MaterialScience AG), 180 g eines Polyetherpolyols mit einer OH-Zahl von 515 mg KOH/g und einer nominalen Funktionalität von 2 (Viskosität bei 25 °C: 55 mPa*s; 1,2-Propylenglycol als Starter; Propylenoxidbasis, Handelsname Polyether L 800 Produkt der Firma Bayer MaterialScience AG) und 0,20 g Toyocat DB40 (thermolatenter Katalysator / blockiertes Amin der Firma TOSOH Corporation) wurden vermischt und für 2 Stunden bei einem Druck von 1 mbar entgast. Zeitgleich wurden 260,4 g einer Isocyanatmischung MDI 4 (NCO-Gehalt 31,4 Gew.-%, hergestellt aus MDI 44 V 20L (polymeres MDI der Firma Bayer MaterialScience AG) mit einem 2,4'-MDI-Gehalt von 3,3 Gew.%; 2,2'-MDI-Gehalt von 0,13 Gew.%) und 0,06 g Acetylaceton ebenfalls für 2 Stunden bei einem Druck von 1 mbar entgast und im Anschluss zur Polyolformulierung zugegeben und weitere 10 min bei 1 mbar weiter entgast. Das so hergestellte Reaktionsgemisch wurde danach in eine Plattenform mit den Abmessungen 300 mm x 200 mm x 4 mm und einer Formtemperatur von 40 °C überführt. Die Formtemperatur wurde innerhalb von 30 min auf 80 °C erhöht, für 3,5 h konstant gehalten und die fertige Platte nach dem Abkühlen der Form auf Raumtemperatur entformt. Die mechanischen Daten der Platte sind in Tabelle 1 aufgeführt. Um die Gelzeit sowie den Viskositätsverlauf bei 23 °C des Harzes (Reaktionsgemisches) zu bestimmen, wurden die Polyolformulierung sowie die Isocyanatabmischung ohne vorheriges Entgasen im oben genannten Verhältnis eingewogen und via Holzlatte im Pappbecher für 10 Sekunden vermischt, so dass ein homogenes Reaktionsgemisch vorlag. Das Gemisch wurde in den Geltimer bzw. das Rheometer überführt.

**Vergleichsbeispiel 7: Herstellung der Polyurethanplatten**

40 g eines Polyetherpolyols mit einer OH-Zahl von 515 mg KOH/g und einer nominalen Funktionalität von 2 (Viskosität bei 25 °C: 55 mPa*s; 1,2-Propylenglycol als Starter; Propylenoxidbasis, Handelsname Polyether L 800 Produkt der Firma Bayer MaterialScience AG), 160 g eines Polyetherpolyols mit einer OH-Zahl von 380 mg KOH/g und einer nominalen Funktionalität von 3 (Viskosität bei 25 °C: 600 mPa*s; Trimethylolpropan als Starter; Propylenoxidbasis, Handelsname Desmophen® 550 U - Produkt der Firma Bayer MaterialScience AG), wurden vermischt und für 2 Stunden bei einem Druck von 1 mbar entgast. Zeitgleich wurden 188,5 g einer Isocyanatmischung MDI 5 (NCO-Gehalt 32,3 Gew.-%; hergestellt aus MDI 1806 Isocyanat der Firma Bayer MaterialScience AG, MDI 44 V 20L (polymeres MDI der Firma Bayer MaterialScience AG), Desmodur 60 RE 11 (polymeres MDI der Firma Bayer MaterialScience AG) mit einem 2,4 MDI-Gehalt von 23,6 Gew.%; 2,2'-MDI-Gehalt von 1,14 Gew.%) ebenfalls für 2 Stunden bei einem Druck von 1 mbar entgast und im Anschluss zur Polyolformulierung zugegeben und weitere 10 min bei 1 mbar weiter entgast. Das so hergestellte Reaktionsgemisch wurde danach in eine Plattenform mit den Abmessungen 300 mm x 200 mm x 4 mm und einer Formtemperatur von 40 °C überführt. Die Formtemperatur wurde innerhalb von 30 min auf 80 °C erhöht, für 3,5 h konstant gehalten und die fertige Platte nach dem Abkühlen der Form auf Raumtemperatur entformt. Die mechanischen Daten der Platte sind in Tabelle 1 aufgeführt. Um die Gelzeit sowie den Viskositätsverlauf bei 23 °C des Harzes (Reaktionsgemisches) zu bestimmen, wurden die Polyolformulierung sowie die Isocyanatabmischung ohne vorheriges Entgasen im oben genannten Verhältnis eingewogen und via Holzlatte im Pappbecher für 10 Sekunden vermischt, so dass ein homogenes Reaktionsgemisch vorlag. Das Gemisch wurde in den Geltimer bzw. das Rheometer überführt.

**Beispiel 8: Herstellung der Polyurethanplatten**

60 g eines Polyetherpolyols mit einer OH-Zahl von 400 mg KOH/g und einer nominalen Funktionalität von 3 (Viskosität bei 25 °C: 370 mPa*s; Glycerin als Starter; Propylenoxidbasis, Handelsname Arcol® Polyol 1030 - Produkt der Firma Bayer MaterialScience AG), 140 g eines Polyetherpolyols mit einer OH-Zahl von 515 mg KOH/g und einer nominalen Funktionalität von 2 (Viskosität bei 25 °C: 55 mPa*s; 1,2-Propylenglycol als Starter; Propylenoxidbasis, Handelsname Polyether L 800 - Produkt der Firma Bayer MaterialScience AG) und 0,30 g Toyocat DB40 (thermolatenter Katalysator / blockiertes Amin der Firma TOSOH Corporation) wurden vermischt und für 2 Stunden bei einem Druck von 1 mbar entgast. Zeitgleich wurden 231,8 g einer Isocyanatmischung MDI 3 (NCO-Gehalt 32,6 Gew.-%; hergestellt aus Desmodur® 60 RE 11 (polymeres MDI der Firma Bayer MaterialScience AG) mit einem 2,4 MDI-Gehalt von 23 Gew.%; 2,2'- MDI-Gehalt von 3,0 Gew.%; einem 2-Kern MDI-Gehalt von 85 Gew.%) und 0,06 g Acetylaceton ebenfalls für 2 Stunden bei einem Druck von 1 mbar entgast, im Anschluss zur Polyolformulierung zugegeben und weitere 10 min bei 1 mbar weiter entgast.

Das so hergestellte Reaktionsgemisch wurde danach in eine Plattenform mit den Abmessungen 300 mm x 200 mm x 4 mm und einer Formtemperatur von 40 °C überführt. Die Formtemperatur wurde innerhalb von 30 min auf 80 °C erhöht, für 3,5 h konstant gehalten und die fertige Platte nach dem Abkühlen der Form auf Raumtemperatur entformt. Die mechanischen Daten der Platte sind in Tabelle 1 aufgeführt. Um die Gelzeit des Harzes (Reaktionsgemisches) sowie den Viskositätsverlauf bei 23 °C zu bestimmen, wurden die Polyolformulierung sowie die Isocyanatabmischung ohne vorheriges Entgasen im oben genannten Verhältnis eingewogen und via Holzlatte im Pappbecher für 10 Sekunden vermischt, so dass ein homogenes Reaktionsgemisch vorlag. Das Gemisch wurde in den Geltimer bzw. das Rheometer überführt.

Beispiel 9: Herstellung der Polyurethanplatten

15,4 g eines Polyetherpolyols mit einer OH-Zahl von 396 mg KOH/g und einer nominalen Funktionalität von 6 (Viskosität bei 25 °C: 11600 mPa*s; Sorbit als Starter; Propylenoxidbasis, Versuchsprodukt N 9392), 184,6 g eines Polyetherpolyols mit einer OH-Zahl von 515 mg KOH/g und einer nominalen Funktionalität von 2 (Viskosität bei 25 °C: 55 mPa*s; 1,2-Propylenglycol als Starter; Propylenoxidbasis, Handelsname L 800 - Produkt der Firma Bayer Material-Science AG) und 0,20 g Toyocat DB40 (thermolatenter Katalysator / blockiertes Amin der Firma TOSOH Corporation) wurden vermischt und für 2 Stunden bei einem Druck von 1 mbar entgast. Zeitgleich wurden 241,4 g einer Isocyanatmischung MDI 1 (NCO - Gehalt 32,9 Gew.%; hergestellt aus MDI 1806; monomeres MDI der Firma Bayer MaterialScience AG und MDI 44 V 20L; polymeres MDI der Firma Bayer MaterialScience AG mit einem 2,2'- MDI - Gehalt von 0,6 Gew.%, 2,4'-MDI-Gehalt von 42,6 Gew.%) und 0,06 g Acetylaceton ebenfalls für 2 Stunden bei einem Druck von 1 mbar entgast, im Anschluss zur Polyolformulierung zugegeben und weitere 10 min. bei 1 mbar weiter entgast

Das so hergestellte Reaktionsgemisch wurde danach in eine Plattenform mit den Abmessungen 300 x 200 x 4 mm und einer Formtemperatur von 40 °C überführt. Die Formtemperatur wurde innerhalb von 30 min. auf 80 °C erhöht, für 3,5 h konstant gehalten und die fertige Platte nach dem Abkühlen der Form auf Raumtemperatur entformt. Die mechanischen Daten der Platte sind in Tabelle 1 aufgeführt. Um die Gelzeit des Harzes (Reaktionsgemisches) sowie den Viskositätsverlauf bei 23 °C zu bestimmen, wurden die Polyolformulierung sowie die Isocyanatabmischung ohne vorheriges Entgasen im oben genannten Verhältnis eingewogen und via Holzlatte im Pappbecher für 10 Sekunden vermischt, so dass ein homogenes Reaktionsgemisch vorlag. Das Gemisch wurde in den Geltimer bzw. das Rheometer überführt.

Tabelle 1: Polyurethansystem

| Beispiel | | 1 | 2 | 3 (Vgl) | 4 (Vgl) | 5 (Vgl) | 6 (Vgl) | 7 (Vgl) | 8 | 9 |
|---|---|---|---|---|---|---|---|---|---|---|
| **Polyol** | | | | | | | | | | |
| Arcol 1030 | | 20,0g | | | | | | | 30,0g | |
| 30SC01 | | | | | | 20,0g | 10,0g | | | |
| L 800 | | 80,0g | 80,0g | | 100,0g | | 90,0g | 20,0g | 70,0g | 92,3g |
| Arcol 1004 | | | | | | 80,0g | | | | |
| S 440 | | | 28,6g | | | | | | | |
| PET 550 U | | | | 90,0g | | | | 80,0g | | |
| DE 4011 T | | | | 10,0g | | | | | | |
| N 9392 | | | | | | | | | | 7,7g |
| Toyocat DB40 | | 0,1g | 0,1g | | | | 0,1g | | 0,15g | 0,2g |
| **Isocyanat** | | | | | | | | | | |
| MDI 1 | | 117,3g | 127,6g | | | | | | | 120,7g |
| MDI 2 | | | | 94,3g | | | | | | |
| MDI 3 | | | | | 122,3g | 77,2 | | | 115,9g | |
| MDI 4 | | | | | | | 130,2g | | | |
| MDI 5 | | | | | | | | 94,3g | | |
| Stabilisator MC | | | | 0,2g | | | | | | |
| Acetylaceton | | 0,03g | 0,03g | | 0,03g | 0,03g | 0,03g | | 0,03g | 0,03g |
| Index (100 NCO/OH) | | 105,0 | 105,0 | 103,4 | 103,4 | 105,0 | 105,0 | 100 | 105 | 105 |
| Polyol OH-Zahl | mgKOH/g | 492,0 | 492,6 | 397,0 | 515,0 | 321,0 | 519,7 | 407 | 480,2 | 505,9 |
| Polyol Funktionalität | | 2,16 | 2,60 | 3,00 | 2,00 | 2,35 | 2,11 | 2,75 | 2,25 | 2,24 |
| Gehalt an primären OH-Gruppen im Polyol | % | <5 | <5 | <5 | <5 | <5 | <5 | 14,4 | <5 | <5 |
| Gew.-% 2,2'-MDI | % | 0,60 | 0,60 | 3,00 | 3,00 | 3,00 | 0,13 | 1,139 | 3,00 | 0,60 |
| Gew.-% 2,4'-MDI | % | 42,58 | 42,58 | 23,00 | 23,00 | 23,00 | 3,30 | 23,57 | 23,00 | 42,58 |
| Gew.-% 2-Kern MDI | % | 85,0 | 85,0 | 85,0 | 85,0 | 85,0 | 40,0 | 69,74 | 85,0 | 85,0 |

(fortgesetzt)

| Isocyanat | | | | | | | | | |
|---|---|---|---|---|---|---|---|---|---|
| Startviskosität | (mPa*s) | 47 | 52 | 156 | 52 | 53 | 130 | 158 | 53 | 37 |
| Viskosität 40 min. (isotherm 23 °C) | (mPa*s) | 168 | 212 | > 1000 | 380 | 208 | 680 | > 1000 | 241 | 323 |
| Viskosität 60 min. (isotherm 23 °C) | (mPa*s) | 312 | 380 | > 10.000 | 615 | 317 | > 1000 | > 1000 | 430 | 940 |
| $t_g$ bei 23 °C | (min) | 136 | 128 | 64 | 76 | 232 | 81 | 83 | 120 | 110 |

Das Beispiel 2 zeigt, dass auch der Einsatz von Polyetherpolyolen mit einer nominalen Funktionalität > 3 in der Polyolformulierung möglich ist, sofern der Gehalt der primären OH-Gruppen in der gesamten Polyolformulierung b) < 10 % ist und die nominale Funktionalität der gesamten Polyolformulierung b) im Bereich von 2,05 - 2,70 liegt.

Das Beispiel 9 zeigt, dass auch der Einsatz von Polyetherpolyolen, die nicht auf Glycerin als Startermolekül basieren mit einer nominalen Funktionalität > 3 in der Polyolformulierung möglich ist, sofern der Gehalt der primären OH-Gruppen in der gesamten Polyolformulierung b) < 10 % ist und die nominale Funktionalität der gesamten Polyolformulierung b) im Bereich von 2,05 - 2,70 liegt.

Tabelle 2: Eigenschaften des ausgehärteten Polyurethanharzes

| Beispiel | | 1 | 2 | 3 (Vgl) | 4 (Vgl) | 5 (Vgl) | 6 (Vgl) | 7 (Vgl) | 8 | 9 |
|---|---|---|---|---|---|---|---|---|---|---|
| Biegeversuch (DIN EN ISO 178) | | | | | | | | | | |
| Modul | N/mm$^2$ | 3086 | 3032 | 3048 | 3056 | 2482 | 3146 | 3056 | 2981 | 3248 |
| Biegefestigkeit bei 3,5 % Randfaserdehnung | N/mm$^2$ | 99,0 | 97,7 | 92,7 | - | 68,8 | 99,1 | 97,2 | 94,3 | 102,5 |
| Biegespannung bei F max. | N/mm$^2$ | 99,9 | 99,5 | 94,1 | 58,9 | 69,3 | 99,9 | 98,7 | 95,1 | 121,48 |
| Biegedehnung bei F max. | % | 3,5 | 3,6 | 3,6 | 3,0 | 3,6 | 3,5 | 3,6 | 3,5 | 5,46 |
| Zugversuch (DIN EN ISO 527) | | | | | | | | | | |
| Modul | MPa | 2939 | 3063 | 2723 | 2811 | 2523 | 3377 | 2806 | 2868 | 3159 |
| Zugfestigkeit bei F max. | MPa | 83,5 | 70,7 | 68,5 | 38,7 | 58,3 | 79,3 | 74,5 | 78,8 | 83,6 |
| Zugdehnung bei F max. | % | 4,6 | 3,6 | 4,2 | 1,4 | 3,5 | 4,2 | 4,2 | 4,4 | 4,4 |
| Zugfestigkeit bei Bruch | MPa | 78,7 | 69,0 | 58,9 | 38,7 | 55,9 | 71,3 | 63,8 | 76,5 | 54,0 |
| Zugdehnung bei Bruch | % | 5,3 | 3,9 | 6,4 | 1,4 | 4,0 | 5,5 | 3,7 | 4,8 | 9,0 |
| Dichte (DIN EN ISO 1183-1) | kg/dm$^3$ | 1,18 | 1,18 | 1,18 | 1,18 | 1,18 | 1,18 | 1,18 | 1,18 | 1,18 |
| HDT A (ISO 75 - 1/75 2004) | °C | 72 | 70 | 59 | 59 | 42 | 67 | 62 | 70 | 72 |

In den Vergleichsbeispielen 3 und 7 wird deutlich, dass eine nominale Funktionalität der Polyolformulierung oberhalb von 2,7 zu einem schnellen Viskositätsaufbau führt (> 1000 mPa*s nach 40 min) und die Gelzeit deutlich reduziert wird, weshalb sich die Harze nicht für den Einsatz im Vakuuminfusionsverfahren zur Herstellung großer Bauteile eignen.

Wie in Vergleichsbeispiel 4 zu erkennen, führt eine nominale Funktionalität der Polyolformulierung unterhalb von 2,05 zu einem niedrigen Niveau sowohl der mechanischen Eigenschaften (geringere Zugdehnung bzw. Zugfestigkeit) als auch der thermischen Stabilität (HDT) der ausgehärteten Matrix.

Insbesondere der gemessene HDT von nur 42 °C zeigt im Vergleichsbeispiel 5, dass innerhalb der nominalen Funktionalität der Polyolformulierung von 2,05 - 2,7 eine zu niedrige OH - Zahl (321 mg KOH/g) der Polyolformulierung zu einem niedrigen Niveau der mechanischen und thermischen Werte des ausgehärteten Harzes führt. Ein Gehalt von in Summe weniger als 25 Gew.-% an 2,2'- und 2,4'- MDI in der Isocyanatmischung zeigt im Vergleichsbeispiel 6, dass trotz einer Startviskosität von 130 mPa*s ein starker Viskositätsanstieg (>1000 mPa*s) des Harzes nach 60 min beobachtet wird, der die Verarbeitung im Vakuuminfusionsverfahren zur Herstellung von Rotorblättern und Strukturbauteilen in der Windindustrie nicht zuläßt.

**Patentansprüche**

1. Polyurethansystem zur Herstellung eines Polyurethanharzes mit einer Dichte von > 1,050 g/cm$^3$, umfassend

   a) eine Polyisocyanatmischung bestehend aus einem oder mehreren Polyisocyanaten,
   b) eine Polyolformulierung, bestehend aus mindestens einem Polyol,
   c) 0 - 5 Gew.-%, bezogen auf das Gesamtgewicht des Polyurethansystems, einer Katalysatorkomponente,
   d) 0 - 20 Gew.-%, bezogen auf das Gesamtgewicht des Polyurethansystems, wenigstens einer weiteren Verbindung mit mindestens einer gegenüber Isocyanaten reaktiven Gruppe,
   e) 0 - 20 Gew.-%, bezogen auf das Gesamtgewicht des Polyurethansystems, Hilfs- und Zusatzmittel,
   **dadurch gekennzeichnet, dass**
   die Polyisocyanatmischung a) mindestens 25 Gew.-% 2,2'-Diphenylmethandiisocyanat (2,2'-MDI) und/oder 2,4'- Diphenylmethandiisocyanat (2,4'-MDI), bezogen auf das Gesamtgewicht von a), enthält, und
   der Anteil an endständigen primären OH-Funktionen in der Polyolformulierung b) höchstens 10 %, bezogen auf die Gesamtzahl aller OH-Funktionen in b), beträgt, und
   die Hydroxylzahl der Polyolformulierung b) mindestens 380 mg KOH/g ist, und
   die Polyolformulierung b) eine nominale Funktionalität von 2,05 - 2,70 aufweist, und
   das Polyurethansystem eine Isocyanat-Kennzahl von 90 - 120 aufweist.

2. Polyurethansystem gemäß Anspruch 1, **dadurch gekennzeichnet, dass** die Isocyanat-Kennzahl 95 - 115 beträgt.

3. Polyurethansystem gemäß Anspruch 1 oder 2, **dadurch gekennzeichnet, dass** die Polyisocyanatmischung a) mindestens 75 Gew.-%, bezogen auf das Gesamtgewicht von a), Diphenylmethandiisocyanate enthält.

4. Polyurethansystem gemäß einem der Ansprüche 1, 2 oder 3, **dadurch gekennzeichnet, dass** die Polyolformulierung b) mindestens ein Polyetherpolyol auf Basis Propylenoxid enthält.

5. Polyurethansystem gemäß einem der vorangehenden Ansprüche, **dadurch gekennzeichnet, dass** der Anteil an endständigen primären OH-Funktionen in der Polyolformulierung b) höchstens 5 %, besonders bevorzugt höchstens 1 %, bezogen auf die Gesamtzahl aller OH-Funktionen in b), beträgt.

6. Polyurethansystem gemäß einem der vorangehenden Ansprüche, **dadurch gekennzeichnet, dass** die Katalysatorkomponente c) thermolatente Katalysatoren in einer Menge (bezogen auf die aktive Komponente exklusive Lösungsmittel) von 0,001 - 5 Gew.-%, bevorzugt von 0,005 - 1 Gew.-%, bezogen auf das Gesamtgewicht des Polyurethansystems, enthält.

7. Polyurethanharz mit einer Dichte von > 1,050 g/cm$^3$, erhältlich durch die Umsetzung eines Polyurethansystems gemäß einem der Ansprüche 1 - 6.

8. Verfahren zur Herstellung eines faserverstärkten Bauteils aus einem Polyurethanharz gemäß Anspruch 7 mittels Vakuuminfusionsverfahren, umfassend die Schritte

   i. Entgasen der Komponenten a) und b) und gegebenenfalls c) - e)
   ii. Vermischen der Komponenten a) - e) unter Erhalt eines Polyurethansystems gemäß Anspruch 1,
   iii. Vakuum-unterstütze Infusion des Polyurethansystems in eine Faserschicht
   iv. Aushärten und Entformen des Bauteils.

9. Faserverstärktes Bauteil, herstellbar durch das Verfahren gemäß Anspruch 8.

10. Verwendung eines faserverstärkten Bauteils gemäß Anspruch 9 zur Herstellung von Verbundbauteilen, z.B. von Rotorblättern von Windkraftanlagen, Karosseriebauteilen von Automobilen oder im Flugzeugbau, in Bauteilen des Gebäude- bzw. Straßenbaus, und sonstigen hochbelasteten Strukturen.

**Claims**

1. Polyurethane system for producing a polyurethane resin having a density of > 1.050 g/cm$^3$, comprising

a) a polyisocyanate mixture consisting of one or more polyisocyanates,

b) a polyol formulation consisting of at least one polyol,

c) 0 - 5% by weight, based on the total weight of the polyurethane system, of a catalyst component,

d) 0 - 20% by weight, based on the total weight of the polyurethane system, of at least one other compound having at least one isocyanate-reactive group,

e) 0 - 20% by weight, based on the total weight of the polyurethane system, of auxiliary and added substances, **characterized in that**

the polyisocyanate mixture a) contains at least 25% by weight of 2,2'-diphenylmethane diisocyanate (2,2'-MDI) and/or 2,4'-diphenylmethane diisocyanate (2,4'-MDI), based on the total weight of a), and

the proportion of terminal primary OH functions in the polyol formulation b) is not more than 10%, based on the total number of all OH functions in b), and

the hydroxyl number of the polyol formulation b) is at least 380 mg KOH/g and

the polyol formulation b) has a nominal functionality of 2.05 - 2.70 and

the polyurethane system has an isocyanate ratio of 90-120.

2. Polyurethane system according to Claim 1, **characterized in that** the isocyanate ratio is 95 - 115.

3. Polyurethane system according to either of Claims 1 and 2, **characterized in that** the polyisocyanate mixture a) contains at least 75% by weight, based on the total weight of a), of diphenylmethane diisocyanates.

4. Polyurethane system according to any of Claims 1, 2 or 3, **characterized in that** the polyol formulation b) contains at least one polyether polyol based on propylene oxide.

5. Polyurethane system according to any of the preceding claims, **characterized in that** the proportion of terminal primary OH functions in the polyol formulation b) is not more than 5%, particularly preferably not more than 1%, based on the total number of all OH functions in b).

6. Polyurethane system according to any of the preceding claims, **characterized in that** the catalyst component c) contains thermolatent catalysts in an amount (based on the active component excluding solvents) of 0.001 - 5% by weight, preferably of 0.005 - 1% by weight, based on the total weight of the polyurethane system.

7. Polyurethane resin having a density of > 1.050 g/cm$^3$ obtainable by the reaction of a polyurethane system according to any of Claims 1 - 6.

8. Process for producing a fiber-reinforced component part from a polyurethane resin according to Claim 7 by means of a vacuum infusion process comprising the steps of:

    i. degassing of the components a) and b) and optionally c) - e)

    ii. mixing of the components a) - e) to afford a polyurethane system according to Claim 1,

    iii. vacuum-assisted infusion of the polyurethane system into a fiber layer

    iv. curing and demolding of the component.

9. Fiber-reinforced component part producible by the process according to Claim 8.

10. Use of a fiber-reinforced component part according to Claim 9 for producing composite component parts, for example rotor blades of wind power plants, body parts of automobiles or in aircraft construction, in component parts for building or road building, and other highly stressed structures.

**Revendications**

1. Système de polyuréthane pour la fabrication d'une résine de polyuréthane ayant une densité > 1,050 g/cm$^3$, comprenant :

    a) un mélange de polyisocyanates constitué par un ou plusieurs polyisocyanates,

    b) une formulation de polyols, constituée par au moins un polyol,

    c) 0 à 5 % en poids, par rapport au poids total du système de polyuréthane, d'un composant catalytique,

    d) 0 à 20 % en poids, par rapport au poids total du système de polyuréthane, d'au moins un autre composé contenant au moins un groupe réactif avec les isocyanates,

e) 0 à 20 % en poids, par rapport au poids total du système de polyuréthane, d'adjuvants et d'additifs, **caractérisé en ce que**

le mélange de polyisocyanates a) contient au moins 25 % en poids de diisocyanate de 2,2'-diphénylméthane (2,2'-MDI) et/ou de diisocyanate de 2,4'-diphénylméthane (2,4'-MDI), par rapport au poids total de a), et

la proportion de fonctions OH primaires terminales dans la formulation de polyols b) est d'au plus 10 %, par rapport au nombre total de toutes les fonctions OH dans b), et

l'indice hydroxyle de la formulation de polyols b) est d'au moins 380 mg de KOH/g, et

la formulation de polyols b) présente une fonctionnalité nominale de 2,05 à 2,70, et

le système de polyuréthane présente un indice d'isocyanate de 90 à 120.

2. Système de polyuréthane selon la revendication 1, **caractérisé en ce que** l'indice d'isocyanate est de 95 à 115.

3. Système de polyuréthane selon la revendication 1 ou 2, **caractérisé en ce que** le mélange de polyisocyanates a) contient au moins 75 % en poids, par rapport au poids total de a), de diisocyanates de diphénylméthane.

4. Système de polyuréthane selon l'une quelconque des revendications 1, 2 ou 3, **caractérisé en ce que** la formulation de polyols b) contient au moins un polyéther-polyol à base d'oxyde de propylène.

5. Système de polyuréthane selon l'une quelconque des revendications précédentes, **caractérisé en ce que** la proportion de fonctions OH primaires terminales dans la formulation de polyols b) est d'au plus 5 %, de manière particulièrement préférée d'au plus 1 %, par rapport au nombre total de toutes les fonctions OH dans b).

6. Système de polyuréthane selon l'une quelconque des revendications précédentes, **caractérisé en ce que** le composant catalytique c) contient des catalyseurs thermolatents en une quantité (par rapport au composant actif à l'exclusion des solvants) de 0,001 à 5 % en poids, de préférence de 0,005 à 1 % en poids, par rapport au poids total du système de polyuréthane.

7. Résine de polyuréthane ayant une densité > 1,050 g/cm³, pouvant être obtenue par la mise en réaction d'un système de polyuréthane selon l'une quelconque des revendications 1 à 6.

8. Procédé de fabrication d'un composant renforcé par des fibres à partir d'une résine de polyuréthane selon la revendication 7 au moyen d'un procédé d'infusion sous vide, comprenant les étapes suivantes :

i. le dégazage des composants a) et b) et éventuellement c) à e),

ii. le mélange des composants a) à e) pour obtenir un système de polyuréthane selon la revendication 1,

iii. l'infusion assistée par un vide du système de polyuréthane dans une couche de fibres,

iv. le durcissement et le façonnage du composant.

9. Composant renforcé par des fibres, pouvant être fabriqué par le procédé selon la revendication 8.

10. Utilisation d'un composant renforcé par des fibres selon la revendication 9 pour la fabrication de composants composites, p. ex. de pales de rotor d'éoliennes, de composants de carrosserie d'automobiles ou dans la construction d'aéronefs, dans des composants de la construction de bâtiments et de routes, et d'autres structures fortement sollicitées.

# EP 3 313 910 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2011069975 A2
- WO 2012134878 A2
- WO 2013057070 A2
- EP 0128691 A2
- EP 2531538 A1

### In der Beschreibung aufgeführte Nicht-Patentliteratur

- **IONESCU.** Chemistry and Technology of Polyols for Polyurethanes. Rapra Technology Limited, 2005, 31 ff
- The General Characteristics of Oligo-Polyols. CHEMISTRY AND TECHNOLOGY OF POLYOLS FOR POLYURETHANES. 55 ff
- Oligo-Polyols for Elastic Polyurethanes. CHEMISTRY AND TECHNOLOGY OF POLYOLS FOR POLYURETHANES. 263 ff
- Polyester Polyols for Elastic Polyurethanes. CHEMISTRY AND TECHNOLOGY OF POLYOLS FOR POLYURETHANES. 321 ff
- Polyether Polyols for Rigid Polyurethane Foams. CHEMISTRY AND TECHNOLOGY OF POLYOLS FOR POLYURETHANES. 419 ff
- Polyester Polyols for Rigid Polyurethane Foams. CHEMISTRY AND TECHNOLOGY OF POLYOLS FOR POLYURETHANES
- Polyurethane. Kunststoff-Handbuch. Carl Hanser Verlag, 1993, vol. VII, 57-67
- Polyurethane. Kunststoff-Handbuch. Carl Hanser Verlag, 1993, vol. VII, 104-110